# FASCICULE DE BREVET EUROPEEN

(11) **EP 0 770 586 B1**
(45) Date de publication et mention de la délivrance du brevet: **17.05.2000**
(21) Numéro de dépôt: 96402270.1
(22) Date de dépôt: 24.10.1996
(51) Int. Cl.: C05F 3/00, C05F 7/00

(54) **Procédé et installation de fabrication d'engrais**
Verfahren und Anlage zur Herstellung von Düngemitteln
Process and installation for producing fertiliser

(30) Priorité: 25.10.1995 FR 9512594
(43) Date de publication de la demande: 02.05.1997
(73) Titulaire: KALTENBACH - THURING S.A., 60000 Beauvais (FR)
(72) Inventeur: Vogel, Edmond, 92420 Vaucresson (FR); Monsterleet, Jacques, 78160 Marly le Roi (FR)
(74) Mandataire: Le Guen, Gérard

(56) Documents cités:
- EP-A- 0 356 781
- US-A- 5 422 015

## Description

La présente invention concerne la valorisation agricole de sous-produits organiques, tels que des déchets agricoles (lisiers, fumiers, résidus culturaux), des déchets urbains (boues de station d'épuration, composts urbains), ou des déchets industriels.

L'invention s'intéresse plus particulièrement à des produits résiduaires comprenant des matières organiques en milieu aqueux, pouvant avoir des vertus de fertilisation ou d'amendement des sols. Selon leur provenance, ces produits sont plus ou moins humides et ont une odeur fréquemment nauséabonde.

Parmi ces produits résiduaires, les déjections animales, les composts et les boues par exemple sont utilisables en agriculture car ils permettent de réaliser un amendement organique et d'effectuer un apport d'oligo-éléments et d'éléments fertilisants. Cette utilisation présente toutefois deux inconvénients majeurs à savoir :
- manutention et transport de tonnages et de volumes importants de produits pour un apport faible en éléments fertilisants, l'épandage excessif sur des surfaces restreintes présentant un risque de pollution de l'air, de l'eau et du sol ,
- assimilation lente et incomplète par les plantes des éléments fertilisants contenus dans les produits qui se trouvent sous forme de combinaisons chimiques non solubles et peu assimilables.

Pour remédier à ces inconvénients, divers traitements peuvent être appliqués à ces produits, qui visent à les concentrer en matière fertilisante et/ou à en transformer certains composants sous une forme assimilable.

Ainsi, il est courant de procéder à une épuration biologique de déchets organiques, ces traitements ayant l'inconvénient de transformer une fraction importante de l'azote et de la matière organique en éléments volatils, d'où une faible valeur finale du produit.

De plus, les procédés sont difficiles à conduire et nécessitent de longs temps de traitement, et leurs coûts sont actuellement trop élevés pour compenser les coûts de stockage et d'épandage. Par ailleurs, ces procédés ne résolvent pas le problème des odeurs.

D'autres traitements reposent sur une séparation mécanique de la phase aqueuse du produit, par une floculation au moyen d'agents organiques. La phase solide obtenue est concentrée en matières fertilisantes mais son taux d'humidité est encore très élevé. D'autres éléments tels l'azote ammoniacal et le potassium peuvent être récupérés de la phase liquide séparée à l'aide de traitements physico-chimiques mais les matières solides ainsi obtenues présentent encore une humidité importante. De manière générale, les phases solides obtenues ont une odeur encore très prononcée.

D'autres procédés de séparation reposent sur une étape thermique d'évaporation permettant d'évaporer une fraction importante de l'eau présente dans les produits résiduaires et donc de concentrer les éléments fertilisants dans la phase solide finale.

Le produit final obtenu, bien que fortement asséché, représente encore une valeur commerciale relativement basse (produit malodorant et assez pauvre). Ces procédés exigent surtout une importante consommation énergétique nécessaire à la base d'évaporation qui rend leur coût prohibitif.

Le document US-A-5 422 015 vise un procédé de traitement de déchets pathogènes par apport de chaleur. Les déchets sont mis en présence d'un mélange d'une base et d'un acide pour porter le mélange à une température d'au moins 70°C pendant au moins 30 minutes.

Malgré les nombreuses techniques disponibles, il persiste un besoin de disposer d'un procédé de traitement de mise en oeuvre relativement aisée et peu coûteuse, offrant une valorisation optimale des sources de matières fertilisantes contenues dans les produits résiduaires organiques.

L'invention a pour but de fournir un procédé de traitement réunissant ces critères.

A cet effet, l'invention a pour objet un procédé de fabrication d'engrais à partir d'un produit résiduaire contenant des matières organiques en milieu aqueux, avec enrichissement en composé fertilisant, caractérisé en ce qu'il consiste à introduire ledit produit résiduaire dans un réacteur tubulaire, ainsi qu'un réactif basique et un réactif acide susceptibles de réagir entre eux de façon exothermique en formant un composé fertilisant, dans des conditions permettant l'évaporation de la majeure partie de l'eau présente dans ledit produit et comprenant une température du réacteur tubulaire de 120 à 240°C, ce qui conduit à la formation d'une phase gazeuse comprenant de la vapeur d'eau et d'une bouillie sensiblement déshydratée enrichie en matière fertilisante; et à séparer en sortie du réacteur tubulaire ladite bouillie de ladite phase gazeuse.

Ce procédé s'applique à toutes sortes de produits résiduaires, tels que des déjections animales, des boues de station d'épuration notamment urbaines et agro-alimentaires, des composts, ou des boues provenant d'autres procédés de traitement, par exemples des boues de méthanisation. Lorsqu'il s'agit de déjections animales, ces dernières peuvent être très liquides telles que des lisiers ou des fientes, ou bien à plus forte teneur en solides tels que des fumiers.

Selon leur nature et leur origine, les produits à traiter peuvent subir un prétraitement, notamment de broyage et/ou homogénéisation.

Le procédé s'applique plus particulièrement à des produits résiduaires à forte teneur en eau, comprise par exemple entre 70 et 97%.

Si la teneur en eau est élevée (90 à 97 % en poids), on prévoit une étape préliminaire de séparation d'eau par des moyens physico-chimiques classiques, par exemple par floculation ou décantation et filtration ou bien par évaporation partielle. Ce type de traitement permet de réduire la teneur en eau à environ 75 à 80 % en poids. Ainsi, la teneur en eau du produit entrant dans le réacteur est de préférence de 70 à 90 %, avantageusement de 70 à 80 % en poids.

Les réactifs acide et basique choisis sont tels qu'ils réagissent pour former un composé dans lequel les éléments qui les constituent ont été transformés sous une forme assimilable. Leur choix est essentiellement dicté par les impératifs écologiques liés à l'utilisation du produit final et par des impératifs économiques. Il est avantageux d'utiliser des réactifs purs ou en solution aqueuse très concentrée de façon à ne pas introduire trop d'eau dans le réacteur.

Le réactif acide est choisi de préférence parmi l'acide sulfurique, y compris de l'acide sulfurique résiduaire, l'acide nitrique, l'acide phosphorique et leurs mélanges.

De même, le réactif basique est choisi de préférence parmi l'ammoniac et des solutions ammoniacales. L'ammoniac peut être utilisé pur à l'état liquide ou gazeux.

Ainsi, la réaction entre l'acide sulfurique et l'ammoniac fournit du sulfate d'ammonium qui est un engrais chimique minéral qui permet d'augmenter la valeur fertilisante du produit final.

Le taux d'évaporation d'eau dans le réacteur tubulaire est déterminé par les quantités respectives de produit résiduaire aqueux, d'acide et de base introduits dans ledit réacteur.

De manière générale, il est préférable d'introduire les réactifs acide et basique en quantité stoechiométrique dans le réacteur.

La régulation du taux d'évaporation d'eau se fait par l'intermédiaire du rapport entre le débit d'eau introduit et le débit d'un réactif en fonction de la chaleur de réaction. Lorsque le réactif basique est l'ammoniac (pur ou en solution), on utilise avantageusement de 0,23 à 0,27 kg de NH₃, en particulier environ 0,25 kg pour évaporer 1 kg d'eau.

La température dans le réacteur au cours du traitement est de 120 à 240° C et notamment de 150 à 240°C.

Le choix des débits de réactifs acide et basique permet également de fixer la quantité de composé fertilisant entrant dans la composition de la bouillie enrichie. De préférence, la bouillie enrichie comprend 15 à 40 %, avantageusement 20 à 30 % en poids sec de matière sèche organique provenant du produit résiduaire et 60 à 85 %, avantageusement 70 à 80 % en poids sec du composé fertilisant formé dans le réacteur.

Ainsi, on introduit avantageusement une quantité globale de réactifs acide et basique de 1,5 à 6 fois, en particulier environ de 2 à 4 fois supérieure à la quantité de matière sèche du produit résiduaire introduite dans le réacteur.

De préférence, le produit n'est pas complètement asséché pour pouvoir être transporté sans risque dans le réacteur. Selon la teneur en eau de la bouillie séparée à la sortie du réacteur, cette dernière pourra subir différentes opérations de mise en forme et/ou de séchage.

Avantageusement, la bouillie enrichie en matière fertilisante est soumise à une étape de granulation-séchage, destinée à la mettre sous une forme solide, réalisée dans des conditions et par des moyens bien connus de l'homme du métier.

Un avantage important de l'invention réside dans le fait que l'étape principale d'évaporation produit un gaz chaud sous pression qui peut être utilisé pour assurer au moins une partie des besoins en chaleur du procédé. La phase gazeuse séparée en sortie du réacteur tubulaire peut ainsi être utilisée comme gaz chaud dans au moins une étape de chauffage des matières premières, d'évaporation partielle de l'eau du produit résiduaire avant l'évaporation principale ou de préchauffage du gaz de séchage des granulés.

L'invention a également pour objet une installation permettant la mise en oeuvre du procédé décrit précédemment et qui comprend un réacteur tubulaire alimenté en continu à une extrémité d'entrée par des moyens d'alimentation en produit résiduaire, réactif acide et réactif basique, et dont l'extrémité de sortie alimente en produit réactionnel une chambre de séparation.

Le réacteur tubulaire peut être de tout type connu. Son dimensionnement dépend du volume de produit résiduaire à traiter et du rendement d'évaporation désiré dans l'étape d'évaporation principale. Avantageusement, le réacteur a un diamètre de 1,5 à 30 cm pour une longueur de 2 m à 10 m, de préférence de 5 à 8 m.

L'installation peut comprendre en outre un dispositif de granulation alimenté en bouillie via une conduite d'amenée reliée à la partie inférieure de la chambre de séparation et un dispositif de séchage.

Selon une variante, l'installation peut comprendre un dispositif de préévaporation du produit résiduaire, équipé de moyens d'alimentation en fluide chaud et de moyens de transport du produit résultant vers le réacteur tubulaire.

Selon une autre variante, l'installation peut comprendre des moyens de préchauffage des matières premières équipés de moyens d'alimentation en fluide chaud, reliés à la partie supérieure de la chambre de séparation, de sorte que la phase gazeuse chaude séparée dans cette chambre de séparation est utilisée en tant que fluide chaud.

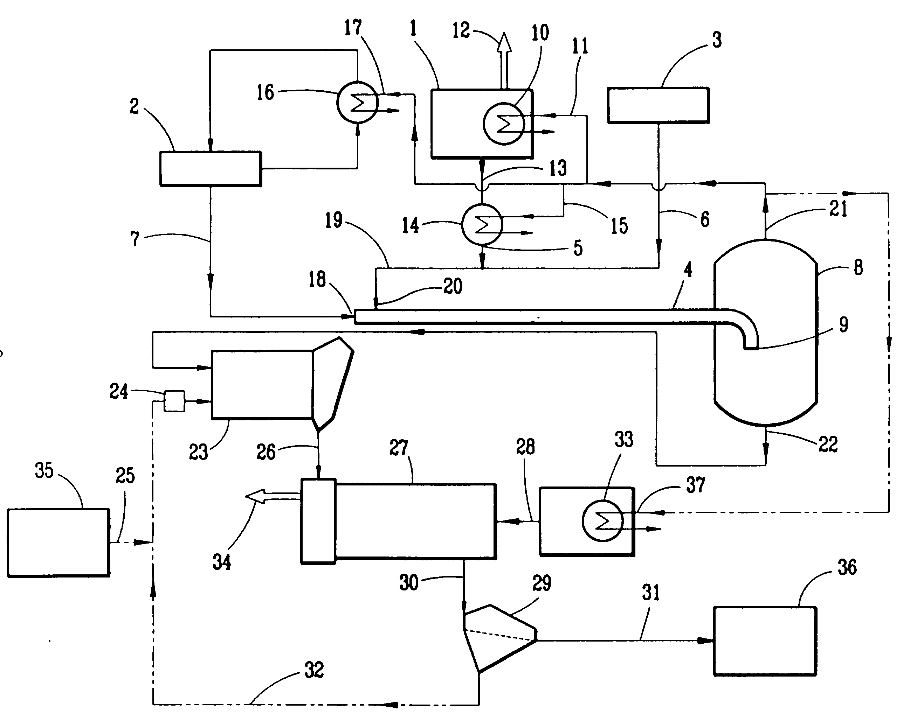

D'autres caractéristiques et avantages de l'invention apparaîtront dans la description qui sera faite ci-après en se référant au dessin annexé dont la figure unique est un schéma d'une installation selon l'invention.

Cette installation comprend essentiellement une réserve de produit résiduaire 1, une réserve de réactif basique 2 et une réserve de réactif acide 3 qui alimentent un réacteur tubulaire 4 via des conduites d'amenée 5,6 et 7 respectivement, ainsi qu'une chambre de séparation 8 dans laquelle débouche le produit réactionnel formé dans le réacteur 4, par l'extrémité de sortie 9 du réacteur. Elle fonctionne de la façon suivante.

La réserve de produit résiduaire 1 est équipée d'un réchauffeur 10 alimenté en fluide chaud via une conduite d'amenée 11, et qui chauffe le produit résiduaire stocké à une température suffisante pour provoquer une évaporation partielle de l'eau contenue dans ledit produit. La vapeur d'eau ainsi formée s'échappe de la réserve 1 par une conduite d'évacuation de gaz 12, alors que le produit chauffé est dirigé par l'intermédiaire d'une conduite 13, vers un poste de préchauffage 14 alimenté en fluide chaud via une conduite 15.

La réserve de réactif basique 2 est équipée d'un réchauffeur 16 alimenté en fluide chaud via une conduite 17.

Les réchauffeurs sont des équipements optionnels qui peuvent être supprimés selon le produit à traiter et le réactif acide utilisé. De même, un réchauffeur peut éventuellement être associé à la réserve de réactif basique.

Le réactif basique est introduit à une extrémité du réacteur en 18 par l'intermédiaire de la conduite 7. Le produit résiduaire préchauffé et préséché et le réactif acide, éventuellement prémélangés dans une conduite 19, sont introduits dans le réacteur tubulaire en un point 20 légèrement en aval du point 18.

La réaction entre les réactifs acide et basiques, provoquant l'évaporation d'une majeure partie de l'eau contenue dans le produit résiduaire préséché, permet à la masse introduite dans le réacteur de progresser dans ce dernier sous l'effet de la pression de vapeur d'eau.

A l'extrémité de sortie du réacteur 9, le mélange réactionnel est déversé dans la chambre de séparation 8, où se produit une séparation de phases entre la bouillie sensiblement déshydratée enrichie en matière fertilisante (teneur en eau de 10 à 30% en poids, notamment de 10 à 20 % en poids) et la phase gazeuse comprenant essentiellement de la vapeur d'eau surchauffée sous pression. La phase gazeuse rassemblée dans la partie supérieure de la chambre de séparation est évacuée via une conduite d'évacuation de gaz 21. La bouillie accumulée dans la partie inférieure de la chambre de séparation est évacuée de cette dernière via une conduite d'évacuation 22.

Cette conduite alimente un dispositif de granulation 23, de tout type connu, éventuellement équipée d'un poste de mélange 24, qui peut également être utilisé pour mélanger à la bouille avant granulation des additifs éventuels introduits par l'intermédiaire d'une conduite 25 reliée à une réserve d'additifs 35 ou bien directement au dispositif de granulation pour recycler une partie de la matière granulée.

Les granulés formés dans le dispositif de granulation sont dirigés via une conduite 26 vers un poste de séchage 27 dans lequel circule de l'air (ou tout autre gaz) chauffé introduit via une conduite d'amenée de gaz 28. Dans la variante représentée sur la figure, l'air de séchage est chauffé sur le site par un réchauffeur 33 alimenté en fluide chaud par la conduite 37.

Les granulés séchés sont ensuite soumis à une opération de tamisage dans un dispositif 29 alimenté en granulés via une conduite 30, pour séparer en 31 le produit marchand dirigé vers une réserve 36 et en 32 le refus.

Une partie des besoins en chaleur de l'installation est assurée par la récupération de la phase gazeuse dans la conduite 21 qui alimente les conduites 11, 15 et 17, qui alimentent elles-mêmes en fluide chaud les réchauffeurs 10, 14 et 16. La conduite 21 peut également alimenter en fluide chaud le réchauffeur 33 via un raccord avec la conduite 37.

Les gaz libérés au cours de la mise en oeuvre du procédé, évacués par la conduite 12 lors du préséchage du produit résiduaire et par une conduite 34 lors du séchage des granulés peuvent être traités de manière connue avant d'être restitués au milieu naturel.

Il en est de même pour les liquides séparés au cours de la mise en oeuvre du procédé, c'est-à-dire les condensats formés dans les réchauffeurs 10, 15, 17 et 33, ainsi que les eaux de lavage éventuellement produites qui peuvent être traités avant leur restitution au milieu naturel.

La mise en oeuvre du procédé selon l'invention dans une installation du type décrit ci-dessus présente le grand intérêt d'avoir une faible consommation énergétique. Une grande partie des besoins énergétiques est fournie par la réaction chimique exothermique mise en oeuvre dans le réacteur tubulaire, fournissant de la vapeur d'eau surchauffée sous pression qui constitue une intéressante source d'énergie.

La dépense énergétique globale reste faible. Elle comprend principalement le séchage du produit lors de l'étape de solidification mais cette dépense reste marginale. Cete dépense peut être nulle si l'on dispose,à proximité de gaz chauds provenant d'une unité voisine d'incinération ou de méthanisation produisant du biogaz.

Le procédé de l'invention permet ainsi de fabriquer dans des conditions économiques optimales un produit fertilisant sous forme de granulés secs et aseptisés avantageusement désodorisés, enrichi en élément fertilisant. La composition du produit fertilisant peut être ajustée selon les besoins en choisissant judicieusement le produit résiduaire initial, les réactifs acide et basique et les additifs éventuellement introduits.

L'invention va maintenant être illustrée par les exemples suivants.

### EXEMPLE 1

On traite en continu dans une installation selon l'invention du lisier de porc préconcentré à 75 % en poids d'eau à partir d'une teneur initiale de 95 % d'eau.

La matière sèche entrante comprend :
- Azote total : 11,2 % en poids
- Phosphate (P₂O₅): 8,0 % "
- Potassium (K₂O): 6,5 % "
- Matière organique fertilisante : 25,7 % "

L'installation utilisée est du type représenté sur la figure unique dont elle diffère par l'absence du réchauffeur 16 pour le réactif basique, du réchauffeur de préséchage 10 et du réchauffeur 14 pour produit séché, de la réserve d'additifs 35 et des conduites d'alimentation en additifs de granulation 32 et 25.

La réserve de lisier 1 délivre dans la conduite 13 un débit de 13,9 t/h de produit à traiter à 30°C.

Le réacteur tubulaire 4 est un tube en acier d'environ 85-90 mm de diamètre, ayant une section de 61,5 cm² et une longueur de 8,8 m, ce qui définit un volume intérieur de 54 litres.

Le réactif acide utilisé est de l'acide sulfurique concentré à 98 %, stocké à 20°C.

Le réactif basique est de l'ammoniac pur stocké à l'état liquide à la température de 15°C. (On pourrait également utiliser de l'ammoniac gazeux en surchauffe à une température entre 50 et 120°C).

Le réacteur tubulaire 4 est alimenté en lisier préconcentré avec un débit de 13,9 t/h, en acide avec un débit de 7 895 kg/h et en ammoniac liquide au moyen d'une pompe avec un débit de 2 683 kg/h. Le rapport débit d'ammoniac/débit d'eau introduit est de 1 : 3,9.

On récupère à l'extrémité de sortie 9 du réacteur un débit de bouillie de 16 346 kg/h. La bouillie récupérée est à la température de réaction de 140°C.

La bouillie séparée dans la chambre de séparation 8 est introduite telle quelle dans le granulateur 23 qui est un appareil conventionnel à tambour rotatif. Les granulés obtenus sont séchés avec de l'air à une température de 150 à 200°C dans le sécheur 27.

On récupère des granulés de produit sec à 95°C, que l'on refroidit à 45°C dans un refroidisseur à air de type classique, notamment à lit fluidisé. Le débit de production de granulés secs est de 14 039 kg/h.

Le produit fini contient 1 % en poids d'eau, la matière sèche se décompose en 25 % de matière sèche organique et 75 % de matière sèche minérale.

Le rendement de l'installation est tel que l'on fabrique une tonne de produit fini sec (1 010 kg de produit à 1% d'eau) à partir de 1 000 kg de lisier préconcentré (soit 5 000 kg de lisier à 95 % d'eau).

Les teneurs en éléments fertilisants dans la matière sèche sortante sont les suivantes :
- Azote total : 18,6 % en poids
- Phosphate (P₂O₅): 2,0 % "
- Potassium (K₂O): 1,6 % "
- Matière organique fertilisante : 22,2 % "

La production horaire de l'installation correspond à une production annuelle de 100 000 t d'engrais. Pour d'autres échelles de production, on fera varier les quantités engagées comme indiqué dans le tableau 1 (les valeurs sont arrondies à la dizaine la plus proche).

| | | | | |
|---|---|---|---|---|
| Production annuelle (t/an) | 50 000 | 100 000 | 250 000 | 500 000 |
| Lisier brut à 5 % (t/an) | 250 000 | 500 000 | 1 250 000 | 2 500 000 |
| Débit NH₃ (kg/h) | 1 340 | 2 700 | 6 700 | 13 400 |
| Débit H₂SO₄ (kg/h) | 3 960 | 8 000 | 19 800 | 39 600 |
| Débit lisier préconcentré à 25 % (kg/h) | 6 920 | 13 900 | 34 600 | 69 200 |

### EXEMPLE 2

On répète l'exemple 1 en remplaçant l'acide sulfurique par de l'acide phosphorique en solution aqueuse titrant 54 % en poids de P₂O₅ (ce qui correspond à environ 78 % en poids de H₃PO₄ et 22 % en poids d'eau) pour réaliser un enrichissement en phosphate ammoniacal.

Les débits de matières premières sont modifiés notamment en raison du fait que la chaleur de la réaction est différente : le rapport débit d'ammoniac/débit d'eau introduit est de 1 : 4,2.

Les paramètres caractéristiques du procédé sont rassemblés pour le tableau 2 ci-après.

### EXEMPLE 3

L'exemple 2 est reproduit en incorporant à la bouillie enrichie du chlorure de potassium et de l'urée lors de la granulation.

Les caractéristiques du procédé figurent aussi au tableau 2.

**TABLEAU 2**

| **Débits alimentant le réacteur** | **EX. 2** | **EX. 3** |
|---|---|---|
| - lisier à 25 % (kg/h) de m.s. | 5 180 | 1 980 |
| - acide phosphorique (kg/h) | 12 470 | 4 760 |
| - eau totale introduite (kg/h) | 6 630 | 2530 |
| - ammoniac (kg/h) | 1 570 | 600 |

| **Débits additifs** | | |
|---|---|---|
| - KCl (kg/h) | - | 4 260 |
| - Urée (kg/h) | - | 4 320 |
| Produit final (t/h) | 13,9 | 13,9 |
| Composition (% poids) | | |
| - N total | 11,00 | 18,5 |
| - P₂O₅ | 48,48 | 18,5 |
| K₂O | 0,47 | 18,6 |
| - matière organique fertilisante | 9,3 | 3,6 |

## Revendications

1. Procédé de fabrication d'engrais à partir d'un produit résiduaire contenant des matières organiques en milieux aqueux, avec enrichissement en composé fertilisant, caractérisé en ce qu'il consiste à introduire ledit produit résiduaire dans un réacteur tubulaire, ainsi qu'un réactif basique et un réactif acide susceptibles de réagir entre eux de façon exothermique en formant un composé fertilisant, dans des conditions permettant l'évaporation de la majeure partie de l'eau présente dans ledit produit et comprenant une température du réacteur tubulaire de 120 à 240° C, ce qui conduit à la formation d'une phase gazeuse comprenant de la vapeur d'eau et d'une bouillie sensiblement déshydratée enrichie en matière fertilisante, et à séparer en sortie du réacteur tubulaire ladite bouillie de ladite phase gazeuse.

2. Procédé selon la revendication 1, caractérisé en ce que la température du réacteur tubulaire est de 150 à 240° C.

3. Procédé selon la revendication 1 ou la revendication 2, caractérisé en ce que les matières premières sont préchauffées avant l'introduction dans le réacteur tubulaire.

4. Procédé selon l'une quelconque des revendications 1 à 3, caractérisé en ce que le produit résiduaire a une teneur en eau de 70 à 90 % en poids, notamment de 70 à 80 % en poids.

5. Procédé selon l'une quelconque des revendications 1 à 4, caractérisé en ce que la teneur en eau de ladite bouillie est de 10 à 30% en poids et notamment de 10 à 20 % en poids.

6. Procédé selon l'une quelconque des revendications précédentes, caractérisé en ce que le réactif acide est choisi parmi l'acide sulfurique, de l'acide sulfurique résiduaire, l'acide nitrique, l'acide phosphorique et leurs mélanges.

7. Procédé selon l'une quelconque des revendications précédentes, caractérisé en ce que le réactif basique est choisi parmi l'ammoniac et des solutions ammoniacales.

8. Procédé selon l'une quelconque des revendications précédentes, caractérisé en ce qu'il comprend en outre une étape de granulation-séchage de ladite bouillie, pour fournir un engrais granulaire sec.

9. Procédé selon la revendication 6, caractérisé en ce que, préalablement à la granulation, ladite bouillie est mélangée avec au moins un additif choisi parmi un engrais minéral solide ou liquide, un oligo-élément et une charge.

10. Procédé selon l'une quelconque des revendications précédentes, caractérisé en ce que ladite phase gazeuse comprenant de la vapeur d'eau est utilisée comme gaz chaud dans au moins une étape de chauffage des matières premières, d'évaporation partielle de l'eau du produit résiduaire ou de préchauffage de gaz de séchage des granulés.

11. Installation pour la mise en oeuvre d'un procédé selon l'une quelconque des revendications précédentes, caractérisée en ce qu'elle comprend un réacteur tubulaire (4) alimenté en continu à une extrémité d'entrée par des moyens d'alimentation (7,19) en le produit résiduaire, en réactif acide et en réactif basique et dont l'extrémité de sortie (9) alimente en produit réactionnel une chambre de séparation (8).

12. Installation selon la revendication 10, caractérisée en ce que le réacteur tubulaire a un diamètre de 1,5 à 30 cm pour une longueur de 2 m à 10 m.

13. Installation selon l'une des revendications 11 ou 12, caractérisée en ce qu'elle comprend en outre un dispositif de granulation (23,24) alimenté en bouillie via une conduite d'amenée (22) reliée à la partie inférieure de la chambre de séparation, et un dispositif de séchage (27) équipé de moyens d'alimentation en granulés (26) et en gaz de séchage (28).

14. Installation selon l'une des revendications 11 à 13, caractérisée en ce que le dispositif de granulation comprend un poste de mélange (24) de la bouillie avec au moins un additif solide ou liquide.

15. Installation selon l'une quelconque des revendications 11 à 14, caractérisée en ce qu'elle comprend un dispositif de préévaporation (10) du produit résiduaire équipé de moyens d'alimentation en fluide chaud (11), et/ou des moyens de préchauffage de matières premières (14,16) équipés de moyens d'alimentation en fluide chaud (15,17), l'un au moins desdits moyens (11,15,17) d'alimentation en fluide chaud étant relié à la partie supérieure de la chambre de séparation (8).

## Claims

1. Process for the manufacture of fertilizer from a residual product containing organic matter in an aqueous milieu, with enrichment by a fertilizing composition, characterized in that it consists of introducing the said residual product into a tubular reactor, as well as a base reagent and an acid reagent able to interact in an exothermic way by forming a fertilizing composition, in conditions allowing the evaporation of a major part of the water present in the said product and including a temperature of the tubular reactor from 120 to 240°C, which leads to the formation of a gas phase comprising water vapour and a considerably dehydrated mush enriched with fertilizing matter, and in separating at the outlet from the tubular reactor the said mush from the said gas phase.

2. Process according to claim 1 or claim 2, characterized in that the temperature of the tubular reactor is from 150 to 240°.

3. Process according to claim 1 or claim 2. characterized in that the raw materials are pre-heated before being introduced into the tubular reactor.

4. Process according to any of claims 1 to 3, characterized in that the residual product has a water content of 70 to 90% in weight, notably from 70 to 80%

5. Process according to any of the claims 1 to 4, characterized in that the content of water of the said mush is from 10 to 30% in weight and notably from 10 to 20%.

6. Process according to any of the preceding claims, characterized in that the reactive acid is chosen from among sulphuric acid, residual sulphuric acid, nitric acid, phosphoric acid and their mixtures.

7. Process according to any one of the preceding claims, characterized in that the base reagent is chosen from among ammoniac and ammoniac solutions.

8. Process according to any one of the preceding claims, characterized in that it includes amongst other things a stage of granulation-drying of the said mush, to provide a dry granulated fertilizer.

9. Process according to claim 6, characterized in that, prior to granulation, the said mush is mixed with at least one additive chosen amongst a fertilizer that is solid or liquid, a trace element or a filler.

10. Process according to any one of the preceding claims, characterized in that the said gas phase including water vapour is used as hot gas in at least one stage of heating of the raw materials, evaporation in part of the water of the residual product or pre-heating of the gas for drying the granules.

11. Installation for the setting up of a process according to any one of the preceding claims, characterized in that it includes a tubular reactor (4) fed continuously at an inlet end through feeding means (7,19) by the residual product, acid reagent and base agent and whose outlet end (9) feeds the reaction product into a separation chamber.

12. Installation according to claim 10, characterized in that the tubular reactor has a diameter 1.5 to 30 cm for a length of 2 to 10m.

13. Installation according to one of the claims 11 or 12, characterized in that it includes amongst other things a granulating device (23,24) fed by a mush via an approach conduit (22) linked to the lower part of the separating chamber, and a drying device (27) equipped with means of feeding in granules (26) and drying gas(28).

14. Installation according to any one of the claims 11 to 13, characterized in that the device for granulation comprises a position for mixing (24) the mush with at least one solid or liquid additive.

15. Installation according to any one of the claims 11 to 14, characterized in that it includes a device for pre-evaporation (10) of the residual product equipped with means of feeding in hot fluid (11) and/or means of pre-heating raw materials (14,16) equipped with means of feeding in hot fluid (15,17) one at least of the said means (11,15,17) of feeding in hot fluid .being linked to the top end of the separating chamber (8).

## Patentansprüche

1. Verfahren für die Herstellung von Düngemitteln aus einem Abfallprodukt, welches organische Stoffe im wäßrigen Medium enthält, die in düngende Verbindungen angereichert werden,
**dadurch gekennzeichnet, daß**
dieses Abfallprodukt in einen Druckrohrreaktor eingefüllt wird, und zwar zusammen mit einem basischen Reagens und einem sauren Reagens, die miteinander exothermisch unter Bedingungen reagieren können, welche die Verdampfung des größten Teils des in diesem Produkt enthaltenen Wassers ermöglichen, wobei der Druckrohrreaktor eine Temperatur zwischen 120 und 240° C hat, wodurch eine Gasphase erzeugt wird, die Wasserdampf und einen weitgehend entwässerten und mit Düngemitteln angereicherten Schlick enthält, und daß am Auslaß des Rohrreaktors dieser Schlick von der Gasphase abgetrennt wird.

2. Verfahren nach Anspruch 1,
**dadurch gekennzeichnet, daß**
die Temperatur des Rohrreaktors zwischen 150 und 240° C liegt.

3. Verfahren nach einem der Ansprüche 1 oder 2,
**dadurch gekennzeichnet, daß**
die Rohstoffe vor ihrer Einfüllung in den Druckrohrreaktor vorgewärmt werden.

4. Verfahren nach einem der Ansprüche 1 bis 3,
**dadurch gekennzeichnet, daß**
das Abfallprodukt einen Wassergehalt von 70 bis 90 Gew.-%, und insbesondere von 70 bis 80 Gew.-% hat.

5. Verfahren nach einem der Ansprüche 1 bis 4,
**dadurch gekennzeichnet, daß**
der Wassergehalt des Schlicks zwischen 10 bis 30 Gew.-%, und insbesondere zwischen 10 bis 20 Gew.-% beträgt.

6. Verfahren nach einem der vorausgegangenen Ansprüche,
**dadurch gekennzeichnet, daß**
das saure Reagens aus Schwefelsäure, residueller Schwefelsäure, Salpetersäure, Phosphorsäure und ihren Gemischen besteht.

7. Verfahren nach einem der vorausgegangenen Ansprüche,
**dadurch gekennzeichnet, daß**
das basische Reagens aus Ammoniak und Ammoniaklösungen besteht.

8. Verfahren nach einem der vorausgegangenen Ansprüche,
**dadurch gekennzeichnet, daß**
es weiterhin einen Schritt der Granulierung/Trocknung des Schlicks umfaßt, um granulierte trockene Düngemittel herzustellen.

9. Verfahren nach Anspruch 6,
**dadurch gekennzeichnet, daß**
vor der Granulierung der Schlick mit mindestens einem Zuschlagstoff vermischt wird, welcher aus einem festen oder flüssigen mineralischen Düngemittel, einem Spurenelement und einer Charge besteht.

10. Verfahren nach einem der vorausgegangenen Ansprüche,
**dadurch gekennzeichnet, daß**
die den Wasserdampf enthaltende Gasphase in mindestens einem Heizvorgang der Rohstoffe, der teilweisen Verdampfung des Wasserdampfes des Abfallproduktes oder der Vorwärmung des Gases für die Trocknung der Granulate als Heißgas verwendet wird.

11. Anlage für die Durchführung eines Verfahrens nach einem der vorausgegangenen Ansprüche,
**dadurch gekennzeichnet, daß**
sie einen Druckrohrreaktor (4) aufweist, der an einem Einlaßende kontinuierlich mit Hilfe von Mitteln (7, 19) für die Einspeisung des Abfallproduktes, des sauren Reagens und des basischen Reagens versorgt wird, und an seinem Auslaßende (9) eine Trennkammer (8) mit dem Reaktionsprodukt versorgt.

12. Anlage nach Anspruch 10,
**dadurch gekennzeichnet, daß**
der Druckrohrreaktor einen Durchmesser zwischen 1,5 bis 30 cm bei einer Länge von 2 bis 10 m hat.

13. Anlage nach einem der Ansprüche 11 oder 12,
**dadurch gekennzeichnet, daß**
sie außerdem eine Vorrichtung für die Granulierung (23, 24) enthält, die über eine Rohrleitung (22), welche am unteren Teil der Trennkammer angeschlossen ist, mit Schlick versorgt wird, sowie eine Vorrichtung für die Trocknung (27) enthält, welche mit Mitteln (28) für die Einspeisung von Granulaten und Gasen für die Trocknung ausgerüstet ist.

14. Anlage nach einem der Ansprüche 11 bis 13,
**dadurch gekennzeichnet, daß**
die Vorrichtung für die Granulierung eine Mischstation (24) für die Vermischung des Schlicks mit mindestens einem festen oder flüssigen Zuschlagstoff aufweist.

15. Anlage nach einem der Ansprüche 11 bis 14,
**dadurch gekennzeichnet, daß**
sie eine Vorrichtung für die Vorverdampfung (10) des Abfallproduktes aufweist, die mit Mitteln (11) für die Versorgung mit heißen Fluiden und/oder mit Mitteln (14, 16) für die Vorwärmung von Rohstoffen, die Mittel (15, 17) für die Versorgung mit heißem Fluid aufweisen, ausgestattet ist, wobei mindestens eines dieser Mittel (11, 15, 17) für die Versorgung mit heißen Fluiden an den oberen Teil der Trennkammer (8) angeschlossen ist.
